# FASCICULE DE BREVET EUROPEEN

(11) **EP 3 752 381 B1**
(45) Date de publication et mention de la délivrance du brevet: **30.03.2022**
(21) Numéro de dépôt: 19710036.5
(22) Date de dépôt: 06.02.2019
(51) Int. Cl.: B60K 15/067, B60K 15/03

(54) **ENSEMBLE D'UN SUPPORT RAIDISSEUR ET D'UNE SANGLE POUR RESERVOIR DE CARBURANT DE VEHICULE AUTOMOBILE**
ANORDNUNG MIT EINEM VERSTEIFUNGSTRÄGER UND EINEM GURT FÜR EINEN KRAFTSTOFFTANK EINES KRAFTFAHRZEUGES
ASSEMBLY COMPRISING A STIFFENING SUPPORT AND A STRAP FOR A MOTOR VEHICLE FUEL TANK

(30) Priorité: 13.02.2018 FR 1851186
(43) Date de publication de la demande: 23.12.2020
(73) Titulaire: PSA Automobiles SA, 78300 Poissy (FR)
(72) Inventeur: ERBA, Cedric, 25310 THULAY (FR)
(86) Numéro de dépôt international: PCT/FR2019/050265
(87) Numéro de publication internationale: WO 2019/158838

(56) Documents cités:
- EP-A1- 2 272 704
- WO-A1-2011/110519
- DE-A1-102012 019 334
- DE-B3-102012 000 400
- JP-A- 2002 339 400
- US-A- 4 886 180

## Description

La présente invention concerne un ensemble d'un support raidisseur et d'une sangle pour réservoir de carburant de véhicule automobile, cet ensemble étant particulièrement avantageux lors du montage du réservoir de carburant dans le véhicule automobile mais restant à demeure sur le réservoir de carburant et assurant un rôle de raidisseur du réservoir de carburant.

Les points de fixation du réservoir de carburant dans un véhicule automobile sont habituellement des pattes faisant partie intégrante de l'enveloppe du réservoir. Le réservoir de carburant peut aussi être fixé par des sangles supplémentaires. Il est rare qu'une sangle de fixation de réservoir doive traverser le réservoir.

Cette particularité est liée à l'architecture complexe de certains véhicules. Cependant, dans certains cas, il n'est pas possible de positionner le point de fixation de la sangle autrement, et donc ceci nécessite le perçage d'un trou dans le réservoir pour laisser passer la sangle et ainsi atteindre son point d'accrochage sur le véhicule.

La présence d'un tel trou créé dans le réservoir de carburant a généré une difficulté collatérale, à savoir une déformation excessive du réservoir lors des vibrations du véhicule roulant. Pour pallier à cette contrainte inédite, il a été proposé plusieurs modes de réalisation de fixation de réservoir limitant la déformation du réservoir en vibration.

Par exemple, le document US20150367726 décrit une fixation de réservoir contribuant à limiter la déformation du réservoir. La fixation consiste en des sangles reliées enserrant le réservoir au réservoir et au véhicule. Dans ce document, il est proposé une structure de montage d'un réservoir de carburant sur une carrosserie de véhicule, la structure étant conçue de sorte que, indépendamment des changements de pression dans le réservoir de carburant en positif ou en négatif, la structure est capable d'éviter une déformation du réservoir de carburant défavorable au bon fonctionnement du réservoir de carburant.

La structure de montage d'un réservoir de carburant sur une carrosserie de véhicule, décrite dans ce document, est conçue de manière à comprendre une partie inférieure de sangle, fixée sur la carrosserie du véhicule, s'étendant le long, au moins, de la paroi inférieure du réservoir de carburant et supportant le réservoir de carburant. Un moyen de jonction de paroi inférieure relie au moins une portion de la paroi inférieure du réservoir de carburant à la partie inférieure de la sangle.

Un élément de support est fixé côté carrosserie du véhicule et supporte le réservoir de carburant et un moyen de jonction de paroi supérieure relie au moins une portion de la paroi supérieure du réservoir de carburant à l'élément de support.

Dans ce document, il n'est pas question à proprement parler d'un raidisseur mais plutôt d'un arrangement des sangles favorable à un support du réservoir de carburant évitant sa déformation.

Un ensemble d'un support raidisseur et d'une sangle destinés à un réservoir de carburant de véhicule automobile est aussi montré par le document EP 2 272 704 A1.

Le problème à la base de la présente invention est de concevoir un élément de renforcement du réservoir de carburant qui puisse effectuer un maintien d'une sangle entourant le réservoir de carburant pendant le montage du réservoir de carburant dans le véhicule automobile et éviter une déformation du réservoir de carburant en roulage du véhicule automobile.

Pour atteindre cet objectif, il est prévu selon l'invention un ensemble d'un support raidisseur et d'une sangle destinés à un réservoir de carburant de véhicule automobile, caractérisé en ce que le support raidisseur présente une forme allongée avec au moins un bras plan s'étendant à partir d'un corps médian auquel une extrémité longitudinale dudit au moins un bras est raccordée, l'autre extrémité longitudinale dudit au moins un bras étant libre et portant une plage d'appui s'étendant perpendiculairement au reste du bras et destinée à être soudée au réservoir de carburant, caractérisé en ce que le corps médian comportant un évidement central le traversant obturé par une toile de pré-maintien, la sangle comportant une extrémité traversée par un évidement aligné avec l'évidement central du corps médian et appliquée contre le corps médian, le corps médian portant des moyens de maintien de ladite extrémité de la sangle.

L'effet technique est d'obtenir un ensemble d'une sangle et d'un support raidisseur remplissant une double fonction de raidissement du réservoir de carburant et de maintien de la sangle. L'ensemble est destiné à être placé sur un trou de passage de la sangle pratiqué dans le réservoir de carburant quand un tel trou est présent dans le réservoir de carburant mais ceci n'est pas limitatif de la présente invention.

Un tel ensemble support raidisseur et sangle peut être montré isolément du réservoir de carburant avant montage donc revendiqué en indépendance du réservoir de carburant. Lors du montage, la sangle peut être insérée au moins en partie dans le réservoir de carburant et le support raidisseur peut être soudé au réservoir de carburant.

Sans ce support raidisseur multi-fonctions faisant partie de l'ensemble selon la présente invention, le réservoir de carburant souffrira de déformations rédhibitoires lors du fonctionnement du véhicule. Le support raidisseur multi-fonctions est une pièce soudée sur le réservoir de carburant qui comme son nom l'indique permet de limiter considérablement les déformations du réservoir lors du fonctionnement du véhicule.

Le support raidisseur sert également d'interface de fixation entre la sangle du réservoir et la structure du véhicule, notamment par l'utilisation d'un goujon porté par une partie de la carrosserie en vis-à-vis du réservoir de carburant. Le support raidisseur est doté de moyens de maintien de la sangle mais aussi d'une toile de pré-maintien destinée à être traversée par le goujon.

Avantageusement, l'ensemble présente au moins deux bras plans s'étendant en direction opposée l'un de l'autre, chaque bras plan comprenant une plage d'appui. L'appui du support raidisseur est ainsi plus stable sur le réservoir de carburant en étant réparti sur deux zones opposées du réservoir de carburant par rapport à un trou porté par le réservoir de carburant.

Selon une première forme de réalisation optionnelle de la présente invention, l'extrémité de la sangle traversée par l'évidement forme une tête arrondie centrée sur un axe longitudinal commun aux évidements du corps médian et de la sangle, les moyens de maintien portés par le corps médian étant sous la forme de moyens d'encliquetage prenant appui sur la périphérie de la tête arrondie sur une face opposée à une face de la tête arrondie appliquée contre le corps médian. Des portions respectives des moyens d'encliquetage chevauchent partiellement la tête arrondie de la sangle et la plaquent contre le corps médian du support raidisseur.

Dans cette première forme de réalisation optionnelle, les moyens d'encliquetage sont sous la forme de deux pattes de fixation disposées en étant diamétralement opposées par rapport à l'axe longitudinal commun aux évidements du corps médian et de la sangle, chaque patte de fixation comprenant une portion de base s'étendant parallèlement à l'axe longitudinal des évidements reliée à une extrémité au corps médian et prolongée à son autre extrémité par une portion libre coudée par rapport à la portion de base en étant en appui contre la face opposée de la tête arrondie, la portion de base étant flexible afin que la portion libre puisse être dégagée de son appui contre la face opposée de la tête arrondie lors d'une action sur la portion de base en écartement de l'axe longitudinal, la patte de fixation étant rappelée élastiquement dans une position d'appui contre la face opposée, les portions libres des deux pattes de fixation pointant l'une vers l'autre.

Ces pattes de fixation servent de moyens d'encliquetage de par leur portion d'extrémité chevauchant localement la tête arrondie de la sangle et la plaquant contre le corps médian du support raidisseur.

Avantageusement, le corps médian est de forme au moins partiellement circulaire en étant percé de part en part par deux passages se trouvant en vis-à-vis respectivement d'une patte de fixation. Ces passages permettent à un opérateur de voir si les pattes de fixation sont bien encliquetées sur la tête arrondie de la sangle.

Dans une deuxième de réalisation optionnelle de la présente invention, l'extrémité de la sangle traversée par l'évidement forme une tête arrondie centrée sur un axe longitudinal commun aux évidements du corps médian et de la sangle, les moyens de maintien portés par le corps médian étant sous la forme de moyens de support cylindriques ou coniques dont une première base, étant celle de plus grand diamètre pour des moyens de support coniques, est solidarisée au corps médian et une deuxième base est prolongée par un embout cylindrique de plus petit diamètre que la deuxième base en étant concentrique à la deuxième base, l'évidement central débouchant à une extrémité libre des moyens de support en surplombant une collerette formée par une partie restante de la deuxième base non occupée par l'embout cylindrique, une face de la tête arrondie tournée vers le corps médian étant en appui contre la collerette, l'embout cylindrique étant introduit dans l'évidement de la tête arrondie.

Les moyens de maintien assurent, dans cette deuxième forme de réalisation, un support de la sangle sur la collerette, la sangle étant maintenue en position en étant insérée autour de l'embout cylindrique.

Dans une troisième forme de réalisation optionnelle de la présente invention qui combine les première et deuxième formes de réalisation, les moyens de maintien portés par le corps comprennent des moyens d'encliquetage prenant appui sur la périphérie de la tête arrondie et des moyens de support cylindriques ou coniques portant l'embout cylindrique de débouché de l'évidement central. Cette troisième forme permet un meilleur maintien de la sangle mais requiert la présence de deux types de moyens de maintien différents, ce qui augmente le coût de fabrication de l'ensemble.

Avantageusement, la plage de support portée par une extrémité libre longitudinale dudit au moins un bras et les moyens de maintien sont disposés sur la même face du support raidisseur destinée à être tournée vers le réservoir de carburant.

L'invention concerne un véhicule automobile comportant un réservoir de carburant et une carrosserie, caractérisé en ce qu'il comprend un tel ensemble d'un support raidisseur et d'une sangle, la sangle faisant le tour du réservoir de carburant et le support raidisseur étant soudé au réservoir de carburant par la plage d'appui d'au moins un bras du support raidisseur, une zone de la carrosserie en vis-à-vis du réservoir de carburant portant un goujon logé dans l'évidement central du corps médian du support raidisseur en ayant traversé la toile de pré-maintien obturant l'évidement central pour un maintien du réservoir de carburant au moins lors du montage du réservoir de carburant dans le véhicule automobile.

Sans la présence d'un tel ensemble avec un support raidisseur, il serait nécessaire d'augmenter l'apport de matière sur une enveloppe du réservoir de carburant, notamment dans la zone percée par un trou pour le passage de la sangle. Sans que cela soit limitatif, il aurait fallu rajouter plus de 10% de masse matière à l'enveloppe de réservoir pour que le réservoir ainsi obtenu soit acceptable en résistance à la déformation. Une telle augmentation de matière est coûteuse et un déroulement du procédé de fabrication du réservoir de carburant peut en être affecté.

En effet, rajouter autant de matière supplémentaire, ce qui peut être estimé à environ 1kg pour un réservoir de carburant de taille moyenne aurait eu une incidence économique importante puisque la matière représente environ 30% du coût d'un réservoir à fabriquer. De même rajouter 1kg de matière alors que dans l'industrie automobile la chasse au poids est devenue une priorité majeure est contre-productif et va à l'encontre des demandes des constructeurs automobiles. Donc, sans l'utilisation d'un tel ensemble selon l'invention, il paraissait difficile de produire un réservoir de carburant résistant aux déformations sans éviter des surcoûts majeurs sur le prix de fabrication du réservoir complet.

L'invention concerne aussi un procédé de montage d'un réservoir de carburant dans un tel véhicule automobile, le procédé comprenant une étape de soudage de la plage d'appui dudit au moins un bras du support raidisseur au réservoir de carburant, une étape de solidarisation d'une sangle entourant le réservoir de carburant sur le support raidisseur autour de l'évidement central et une étape de solidarisation du réservoir de carburant avec la carrosserie du véhicule par insertion d'un goujon porté par une zone de la carrosserie en vis-à-vis du réservoir de carburant dans l'évidement central du support raidisseur.

Tout d'abord le procédé peut avoir lieu chez le fournisseur de réservoirs de carburant. Chez le fournisseur, le support raidisseur est soudé sur l'enveloppe du réservoir. Ensuite, la sangle de maintien du réservoir est assemblée en étant maintenue par le support raidisseur déjà soudé au réservoir de carburant. Le réservoir ainsi monté est livré au constructeur automobile en usine de montage du véhicule automobile.

A ce stade, le réservoir de carburant est coiffé sur le véhicule, la toile de pré-maintien sur le support raidisseur est percée par un goujon et permet la tenue du réservoir avant vissage final du réservoir de carburant par rapport à la carrosserie du véhicule automobile, la toile de pré-maintien effectuant un maintien par friction avec le filetage du goujon.

La mise en oeuvre du procédé selon l'invention a avant tout permis de limiter le coût de fabrication du réservoir à carburant et de son montage sur véhicule, de pallier à des contraintes de déformations inhérentes au trou dans le réservoir laissé pour faire passer la sangle, et de permettre de conférer des fonctions de pré-maintien au support raidisseur pour permettre une fabrication du véhicule dans des conditions tout à fait standards.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un réservoir de carburant dont l'enveloppe présente un trou de passage de sangle, un tel réservoir pouvant recevoir un ensemble d'un support raidisseur et d'une sangle selon la présente invention,
- la figure 2 est une représentation schématique d'une vue en perspective d'un réservoir de carburant dont l'enveloppe présente un trou de passage de sangle, un tel réservoir recevant l'ensemble d'un support raidisseur et d'une sangle selon la présente invention,
- les figures 3 et 4 sont des représentations schématiques d'une vue en perspective respectivement de dessus et de dessous d'un support raidisseur faisant partie de l'ensemble selon une première forme de réalisation optionnelle conforme à la présente invention,
- les figures 5 et 6 sont des représentations schématiques d'une vue de dessous d'un réservoir de carburant muni de l'ensemble d'un support raidisseur et d'une sangle selon la première forme de réalisation optionnelle conforme à la présente invention, la figure 6 étant agrandie par rapport à la figure 5 au niveau de l'extrémité libre de la sangle solidarisée au support raidisseur,
- la figure 7 est une représentation schématique d'une vue en perspective d'un support raidisseur faisant partie de l'ensemble selon une deuxième forme de réalisation optionnelle conforme à la présente invention,
- la figure 8 est une représentation schématique d'une vue de dessous d'un réservoir de carburant muni de l'ensemble d'un support raidisseur et d'une sangle selon la deuxième forme de réalisation optionnelle conforme à la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Dans ce qui va suivre, on comprend les termes « supérieur » et « inférieur », et autres références à des positionnements spatiaux en référence aux composants positionnés dans leur position de fonctionnement et d'usage normal, notamment dans un véhicule automobile disposé sur un plan horizontal avec le réservoir de carburant monté dans le véhicule automobile.

Le moteur thermique associé à un tel réservoir de carburant peut être un moteur à allumage par compression, notamment un moteur Diesel ou fonctionnant au gazole ou un moteur thermique à allumage commandé, notamment un moteur à carburant essence ou à mélange contenant de l'essence.

Dans ce qui va suivre, le mot carrosserie est pris dans son sens large et peut être considéré comme désignant la caisse du véhicule automobile comme son châssis. La carrosserie comprend, d'une part, la caisse, qui constitue la structure métallique du véhicule, et, d'autre part, les équipements intérieurs et extérieurs qui garnissent celle-ci.

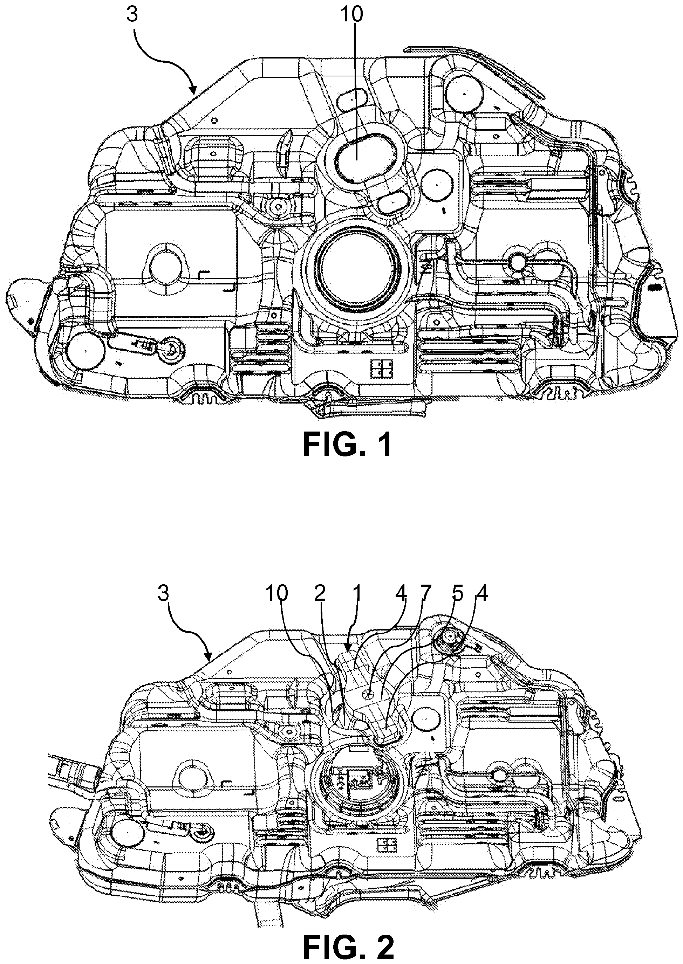

En se référant à la figure 1, cette figure montre un réservoir 3 de carburant avec un trou 10 de passage d'une sangle non montrée à cette figure. La présence d'un tel trou 10 de passage induit une zone de faiblesse dans le réservoir 3 de carburant, cette zone entourant le trou 10 étant susceptible de se déformer, ce qui est à éviter.

Pour combattre une telle déformation, en se référant à la figure 2, la présente invention propose d'utiliser un support raidisseur 1 s'étendant au-dessus du trou 10 de passage de la sangle 2. Ce support raidisseur 1 recouvre sensiblement tout le pourtour du trou 10 et forme avec une sangle 2 un ensemble pouvant être reconnu individuellement avant montage.

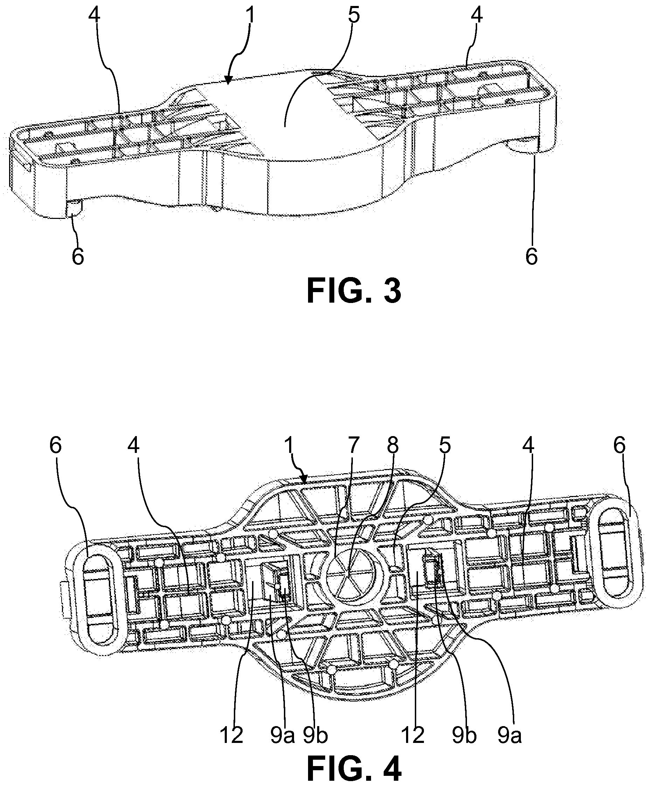

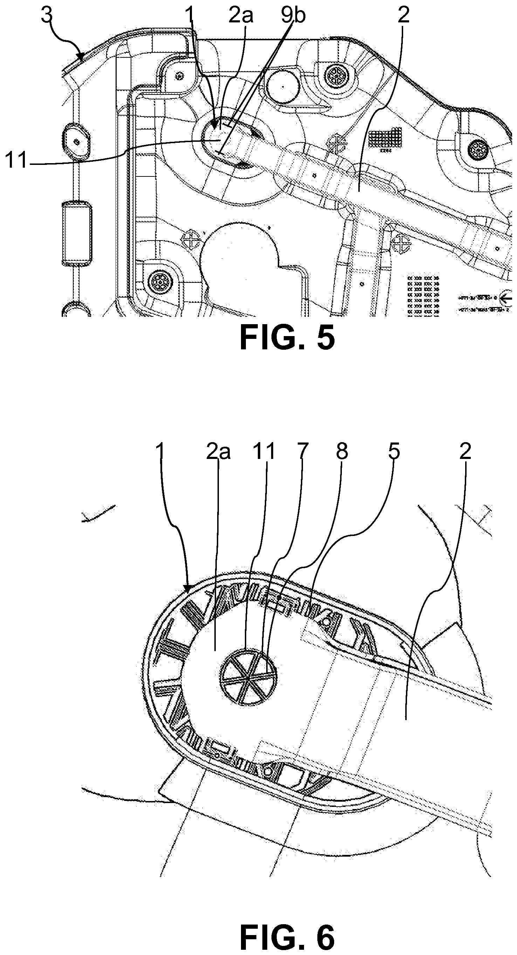

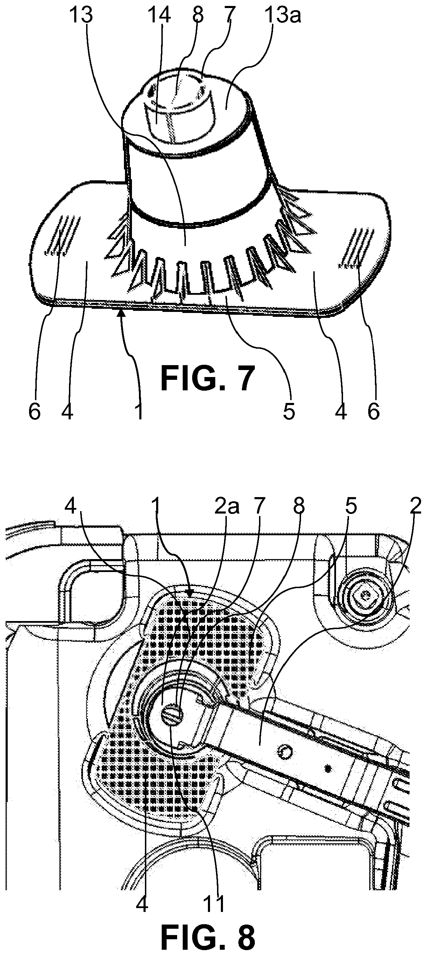

Les figures 3 à 6 montrent une première forme de réalisation optionnelle de réalisation d'un tel ensemble d'un support raidisseur 1 et d'une sangle 2 tandis que les figures 7 à 8 montre une deuxième forme de réalisation optionnelle de réalisation d'un tel ensemble d'un support raidisseur 1 et d'une sangle 2.

En se référant aux figures 3 à 8, pour toutes les formes de réalisation selon l'invention de l'ensemble d'un support raidisseur 1 et d'une sangle 2 destinés à un réservoir 3 de carburant de véhicule automobile, le support raidisseur 1 présente une forme allongée avec au moins un bras 4 plan, avantageusement deux bras 4 aux figures 3 à 8 s'étendant à partir d'un corps médian 5 auquel une extrémité longitudinale du bras 4 est raccordée.

Les bras 4 sont mieux visibles aux figures 3 à 6 qu'aux figures 7 et 8, le corps médian 5 étant sensiblement circulaire et de diamètre plus grand qu'une largeur des bras 4 à ces figures 3 à 6. Par extension, les portions longitudinales du support raidisseur 1 des figures 7 et 8 peuvent être assimilées à des bras 4.

S'il est montré deux bras 4 aux figures 3 à 8, le nombre de bras 4 peut être différent de deux, par exemple en étant trois ou quatre avec, dans ce dernier cas, deux bras 4 perpendiculaires à deux autres bras 4.

L'autre extrémité longitudinale du ou de chaque bras 4 est libre, avant soudage du support raidisseur 1 sur le réservoir 3 de carburant. L'autre extrémité longitudinale du ou de chaque bras 4 porte une plage d'appui 6 s'étendant perpendiculairement au reste du bras 4 et destinée à être soudée au réservoir 3 de carburant.

Dans l'ensemble selon l'invention, le corps médian 5 du support raidisseur 1 comporte un évidement central 7 le traversant obturé par une toile de pré-maintien 8. La sangle 2 comporte une extrémité 2a traversée par un évidement 11 aligné avec l'évidement central 7 du corps médian 5 et appliquée contre le corps médian 5, le corps médian 5 portant des moyens de maintien 9a, 9b; 13, 14 de ladite extrémité 2a de la sangle 2.

Les moyens de maintien 9a, 9b; 13,14 d'extrémité 2a de la sangle 2 portés par le support raidisseur 1 permettent à la sangle 2 de rester en bonne position, notamment, le cas échéant, pendant un transport entre le fournisseur du réservoir 3 de carburant et l'usine de montage du véhicule et ce jusqu'à ce que l'ensemble du réservoir 3 soit monté sur le véhicule.

Le support raidisseur 1 est également prémuni d'une toile de pré-maintien 8 destiné à un goujon porté par la carrosserie ou caisse du véhicule. Cette toile de pré-maintien 8, avantageusement fine, sera percée lors du coiffage du réservoir 3 de carburant sur le véhicule par le goujon, ce qui permet de maintenir le réservoir 3 au moins temporairement en prise sur le goujon de la caisse avant qu'un opérateur ne vienne visser un écrou de fixation pour serrer l'ensemble sangle 2 et support raidisseur 1 ainsi que le réservoir 3.

Ce maintien au moins temporaire permet au réservoir 3 complet de ne pas retomber par terre avant que l'opérateur ne réalise le vissage de l'ensemble. La toile de pré-maintien 8 transpercée par le goujon lors du coiffage est de conception telle qu'elle reste en prise sur les filets du goujon temporairement lors du coiffage.

Le support raidisseur 1 peut être en matière plastique dure ou en métal, les moyens de maintien 9a, 9b; 13,14 pouvant être flexibles comme il sera vu dans le détail de la première forme de réalisation optionnelle de la présente invention.

Le dimensionnement du support raidisseur 1 peut dépendre des dimensions du trou 10 de passage dans l'enveloppe du réservoir 3 à carburant mais aussi du niveau de déformation du réservoir 3 que l'on cherche à limiter. Les caractéristiques dimensionnelles du support raidisseur 1 peuvent donc varier d'un réservoir 3 à l'autre ou d'un véhicule à l'autre.

Comme le support raidisseur 1 répond à une faiblesse architecturelle du réservoir 3 de carburant de par l'existence ou non d'un trou 10 de passage de la sangle 2 dans le réservoir 3 de carburant ou par la présence de tout autre élément diminuant la résistance à la déformation du réservoir 3 de carburant, le support raidisseur 1 a été conçu pour rigidifier le réservoir 3 de carburant et limiter sa déformation en roulage du véhicule automobile. Des calculs de simulation vibratoire ont permis de démontrer le gain apporté par un tel ensemble avec un tel support raidisseur 1 et également permis de dimensionner correctement le support raidisseur 1 au réservoir 3 de carburant.

Un apport principal de la présente invention à l'état de la technique est d'avoir conféré à un support raidisseur 1 d'autres fonctions que sa fonction de limitation de déformation. En effet, il restait indispensable de laisser passer la sangle 2 du réservoir 3 pour permettre son accrochage sur la carrosserie. De ce fait, le support raidisseur 1 est devenu une pièce d'interface entre la sangle 2 et la structure du véhicule.

Cette interface nouvelle a généré des réponses à des contraintes collatérales. La première réponse a été de permettre le maintien de la sangle 2 sur le réservoir 3 de carburant pendant le transport entre le fournisseur et l'usine de montage du véhicule. Ceci a été résolu par la présence de moyens de maintien 9a, 9b; 13,14 de la sangle 2 sur le support raidisseur 1, par exemple par encliquetage conformément à la première forme de réalisation optionnelle de la présente invention.

Dans cette première forme, c'est le fournisseur qui effectue l'encliquetage de la sangle 2 dans ces moyens de maintien 9a, 9b qui permettent à la sangle 2 de rester en position jusqu'au coiffage du réservoir 3 de carburant sur le véhicule. De même, le réservoir 3 lors du coiffage vient s'accrocher sur des goujons soudés sur la caisse du véhicule, avantageusement en plusieurs points de fixation du réservoir 3.

L'évidement central 7 du corps médian 5 du support raidisseur 1 porte une toile fine de pré-maintien pour que le goujon reste en prise le temps que l'opérateur de l'usine de montage intervienne pour visser l'ensemble avec un écrou de fixation.

Il s'ensuit que le support raidisseur 1 selon l'invention répond donc avant tout à un problème de déformation du réservoir 3 mais présente également des solutions techniques supplémentaires de fixation de la sangle 2 et de fixation du réservoir 3 de carburant sur véhicule.

L'évidement 11 de la sangle 2 peut être légèrement plus grand en diamètre que l'évidement central 7 du support raidisseur 1, la sangle 2 pouvant être introduite autour de l'évidement central 7 du corps médian 5 du support raidisseur 1.

Comme montré aux figures 3 à 8, l'ensemble peut présenter au moins deux bras 4 plans s'étendant en direction opposée l'un de l'autre, chaque bras 4 plan comprenant une plage d'appui 6. L'action contre déformation effectuée par le support raidisseur 1 est alors répartie sur deux zones se trouvant diamétralement opposée au trou 10 de passage dans le réservoir 3 de carburant, avantageusement dans son enveloppe.

Dans la première forme de réalisation optionnelle de la présente invention, comme montré aux figures 3 à 6, l'extrémité 2a de la sangle 2 traversée par l'évidement 11 peut former une tête arrondie 2a centrée sur un axe longitudinal commun aux évidements 7, 11 du corps médian 5 et de la sangle 2. Dans cette première forme de réalisation, les moyens de maintien 9a, 9b; 13,14 portés par le corps médian 5 peuvent être sous la forme de moyens d'encliquetage 9a, 9b prenant appui sur la périphérie de la tête arrondie 2a. Ceci peut se faire sur une face opposée à une face de la tête arrondie 2a appliquée contre le corps médian 5 pour empêcher la tête arrondie 2a de se décoller du corps médian 5 du support raidisseur 1.

Dans cette première forme de réalisation optionnelle, les moyens d'encliquetage 9a, 9b peuvent être sous la forme de deux pattes de fixation 9a, 9b disposées en étant diamétralement opposées par rapport à l'axe longitudinal commun aux évidements 7, 11 du corps médian 5 et de la sangle 2.

Dans cette première forme de réalisation optionnelle de la présente invention, chaque patte de fixation 9a, 9b peut comprendre une portion de base 9a s'étendant parallèlement à l'axe longitudinal des évidements 7, 11 reliée à une extrémité au corps médian 5, les évidements 7, 11 comprenant l'évidement central 7 du corps médian 5 du support raidisseur 1 et l'évidement 11 de la tête arrondie 2a de la sangle 2.

Cette portion de base 9a peut être prolongée à son autre extrémité par une portion libre 9b coudée par rapport à la portion de base 9a en étant en appui contre la face opposée de la tête arrondie 2a, avantageusement d'environ 90° avec une marge de +/-20°.

La portion de base 9a peut être flexible afin que la portion libre 9b puisse être dégagée de son appui contre la face opposée de la tête arrondie 2a lors d'une action sur la portion de base 9a en écartement de l'axe longitudinal. Cependant, la patte de fixation 9a, 9b peut être rappelée élastiquement dans une position d'appui contre la face opposée de la tête arrondie 2a de la sangle 2. Les portions libres 9b des deux pattes de fixation 9a, 9b pointent l'une vers l'autre en chevauchant localement des zones respectives de la tête arrondie 2a.

Dans cette première forme de réalisation optionnelle de la présente invention toujours montrée aux figures 3 à 6, le corps médian 5 peut être de forme au moins partiellement circulaire en étant percé de part en part par deux passages 12 se trouvant en vis-à-vis respectivement d'une patte de fixation 9a, 9b. Comme il est visible notamment à la figure 4, une demi-portion de la périphérie du corps médian 5 peut comprendre un méplat tandis que la demi-portion complémentaire moins la partie adjacente aux bras 4 est sensiblement circulaire.

Dans une deuxième forme de réalisation optionnelle de la présente invention montrée aux figures 7 et 8, l'extrémité 2a de la sangle 2 traversée par l'évidement 11 peut former une tête arrondie 2a centrée sur un axe longitudinal commun aux évidements 7, 11 du corps médian 5 et de la sangle 2. Ceci ne distingue pas la deuxième forme de réalisation de la première forme de réalisation.

Dans cette deuxième forme de réalisation optionnelle de la présente invention, les moyens de maintien 9a, 9b; 13,14 portés par le corps médian 5 peuvent être sous la forme de moyens de support cylindriques ou coniques 13.

Une première base des moyens de support cylindriques ou coniques 13, étant celle de plus grand diamètre pour des moyens de support coniques, peut être solidarisée au corps médian 5. Une deuxième base des moyens de support cylindriques ou coniques 13, étant celle de plus petit diamètre pour des moyens de support coniques, peut être prolongée par un embout cylindrique 14 de plus petit diamètre que la deuxième base en étant concentrique à la deuxième base.

C'est par une extrémité libre de l'embout cylindrique 14 que l'évidement central 7 peut déboucher, donc à une extrémité libre des moyens de support 13,14 en surplombant une collerette 13a formée par une partie restante de la deuxième base non occupée par l'embout cylindrique 14.

Dans cette configuration, une face de la tête arrondie 2a tournée vers le corps médian 5 peut être en appui contre la collerette 13a, l'embout cylindrique 14 étant introduit dans l'évidement 11 de la tête arrondie 2a de la sangle 2.

Dans une troisième forme de réalisation optionnelle de la présente invention combinant les première et deuxième formes de réalisation optionnelle, les moyens de maintien 9a, 9b; 13,14 portés par le corps médian 5 peuvent comprendre des moyens d'encliquetage 9a, 9b prenant appui sur la périphérie de la tête arrondie 2a, comme montré dans la première forme de réalisation optionnelle et des moyens de support cylindriques ou coniques 13 portant l'embout cylindrique 14 de débouché de l'évidement central 7, comme montré dans la deuxième forme de réalisation optionnelle.

La plage de support portée par une extrémité libre longitudinale du bras 4 ou de chaque bras 4 et les moyens de maintien 9a, 9b; 13,14 aussi bien pour les trois formes de réalisation optionnelles de la présente invention peuvent être disposés sur la même face du support raidisseur 1 destinée à être tournée vers le réservoir 3 de carburant donc en étant intercalés entre le support raidisseur 1 et une portion de l'enveloppe du réservoir 3 de carburant sur laquelle le support raidisseur 1 est soudé.

L'invention concerne un véhicule automobile comportant un réservoir 3 de carburant et une carrosserie, le réservoir 3 de carburant comprenant un ensemble d'un support raidisseur 1 et d'une sangle 2 tel que précédemment décrit. La sangle 2 fait le tour du réservoir 3 de carburant, avantageusement en passant par un trou pratiqué dans l'enveloppe du réservoir 3 de carburant et le support raidisseur 1 est soudé au réservoir 3 de carburant par la plage d'appui 6 du bras 4 ou de chaque bras 4 du support raidisseur 1.

Une zone de la carrosserie en vis-à-vis du réservoir 3 de carburant porte un goujon qui lors du montage du réservoir 3 de carburant dans le véhicule automobile est logé dans l'évidement central 7 du corps médian 5 du support raidisseur 1 en ayant traversé la toile de pré-maintien 8 obturant l'évidement central 7. Ceci permet un maintien au moins provisoire du réservoir 3 de carburant, ceci au moins lors du montage du réservoir 3 de carburant dans le véhicule automobile.

L'invention concerne aussi un procédé de montage d'un réservoir 3 de carburant dans un tel véhicule automobile. Le procédé comprend une étape de soudage de la plage d'appui 6 du bras 4 ou de chaque bras 4 du support raidisseur 1 au réservoir 3 de carburant.

Cette étape est suivie d'une étape de solidarisation d'une sangle 2 entourant le réservoir 3 de carburant sur le support raidisseur 1 autour de l'évidement central 7. La sangle 2 pouvait avoir été préalablement introduite dans l'enveloppe du réservoir 3 de carburant et sortir de l'enveloppe dans le trou 10 de passage.

Ensuite, il est effectué une étape de solidarisation du réservoir 3 de carburant avec la carrosserie du véhicule par insertion d'un goujon porté par une zone de la carrosserie en vis-à-vis du réservoir 3 de carburant dans l'évidement central 7 du support raidisseur 1. Pour la fixation finale du réservoir 3 dans le véhicule, d'autres points de fixation peuvent être prévus.

Notamment aux figures 2, 5 et 8, le support raidisseur 1, avantageusement une pièce en matière plastique, peut être soudé sur le réservoir 3 de carburant grâce à des plages de soudure 6. Aux figures 2, 5 et 8, il est montré deux plages de soudage 6 ou plages d'appui à chaque extrémité d'un bras 4 mais il est possible de concevoir un support raidisseur 1 proposant plus ou moins de plages de soudage à l'extrémité de chaque bras 4 mais aussi avec des bras 4 additionnels.

Le support raidisseur 1 de l'ensemble selon l'invention peut-être localisé en face supérieure ou inférieure du réservoir 3 de carburant. Aux figures 2, 5 et 8, le support raidisseur 1 est montré positionné en partie supérieure du réservoir 3 mais ceci n'est pas limitatif.

## Revendications

1. Ensemble d'un support raidisseur (1) et d'une sangle (2) destinés à un réservoir (3) de carburant de véhicule automobile, le support raidisseur (1) présente une forme allongée avec au moins un bras (4) plan s'étendant à partir d'un corps médian (5) auquel une extrémité longitudinale dudit au moins un bras (4) est raccordée, l'autre extrémité longitudinale dudit au moins un bras (4) étant libre et portant une plage d'appui (6), ladite autre extrémité longitudinale dudit au moins un bras (4) s'étendant perpendiculairement au reste du bras (4) et étant destinée à être soudée au réservoir (3) de carburant, **caractérisé en ce que** le corps médian (5) comportant un évidement central (7) le traversant obturé par une toile de pré-maintien (8) qui est destiné à être percée, lors du coiffage du réservoir (3) de carburant sur le véhicule, par un goujon, la sangle (2) comportant une extrémité (2a) traversée par un évidement (11) aligné avec l'évidement central (7) du corps médian (5) et appliquée contre le corps médian (5), le corps médian (5) portant des moyens de maintien (9a, 9b; 13,14) de ladite extrémité (2a) de la sangle (2).

2. Ensemble selon la revendication 1, lequel présente au moins deux bras (4) plans s'étendant en direction opposée l'un de l'autre, chaque bras (4) plan comprenant une plage d'appui (6).

3. Ensemble selon la revendication 1 ou 2, dans lequel l'extrémité de la sangle (2) traversée par l'évidement (11) forme une tête arrondie (2a) centrée sur un axe longitudinal commun aux évidements (7, 11) du corps médian (5) et de la sangle (2), les moyens de maintien (9a, 9b; 13,14) portés par le corps médian (5) étant sous la forme de moyens d'encliquetage (9a, 9b) prenant appui sur la périphérie de la tête arrondie (2a) sur une face opposée à une face de la tête arrondie (2a) appliquée contre le corps médian (5).

4. Ensemble selon la revendication précédente, dans lequel les moyens d'encliquetage sont sous la forme de deux pattes de fixation (9a, 9b) disposées en étant diamétralement opposées par rapport à l'axe longitudinal commun aux évidements (7, 11) du corps médian (5) et de la sangle (2), chaque patte de fixation (9a, 9b) comprenant une portion de base (9a) s'étendant parallèlement à l'axe longitudinal des évidements (7, 11) reliée à une extrémité au corps médian (5) et prolongée à son autre extrémité par une portion libre (9b) coudée par rapport à la portion de base (9a) en étant en appui contre la face opposée de la tête arrondie (2a), la portion de base (9a) étant flexible afin que la portion libre (9b) puisse être dégagée de son appui contre la face opposée de la tête arrondie (2a) lors d'une action sur la portion de base (9a) en écartement de l'axe longitudinal, la patte de fixation (9a, 9b) étant rappelée élastiquement dans une position d'appui contre la face opposée, les portions libres (9b) des deux pattes de fixation (9a, 9b) pointant l'une vers l'autre.

5. Ensemble selon la revendication précédente, dans lequel le corps médian (5) est de forme au moins partiellement circulaire en étant percé de part en part par deux passages (12) se trouvant en vis-à-vis respectivement d'une patte de fixation (9a, 9b).

6. Ensemble selon la revendication 1 ou 2, dans lequel l'extrémité de la sangle (2) traversée par l'évidement (11) forme une tête arrondie (2a) centrée sur un axe longitudinal commun aux évidements (7, 11) du corps médian (5) et de la sangle (2), les moyens de maintien (9a, 9b; 13,14) portés par le corps médian (5) étant sous la forme de moyens de support cylindriques ou coniques (13) dont une première base, étant celle de plus grand diamètre pour des moyens de support coniques, est solidarisée au corps médian (5) et une deuxième base est prolongée par un embout cylindrique (14) de plus petit diamètre que la deuxième base en étant concentrique à la deuxième base, l'évidement central (7) débouchant à une extrémité libre des moyens de support (13,14) en surplombant une collerette (13a) formée par une partie restante de la deuxième base non occupée par l'embout cylindrique (14), une face de la tête arrondie (2a) tournée vers le corps médian (5) étant en appui contre la collerette (13a), l'embout cylindrique (14) étant introduit dans l'évidement (11) de la tête arrondie (2a).

7. Ensemble selon l'une quelconque des revendications 3 à 5 et la revendication 6, dans lequel les moyens de maintien (9a, 9b; 13,14) portés par le corps médian (5) comprennent des moyens d'encliquetage (9a, 9b) prenant appui sur la périphérie de la tête arrondie (2a) et des moyens de support cylindriques ou coniques (13) portant l'embout cylindrique (14) de débouché de l'évidement central (7).

8. Ensemble selon l'une quelconque des revendications précédentes, dans lequel la plage de support (6) portée par une extrémité libre longitudinale dudit au moins un bras (4) et les moyens de maintien (9a, 9b; 13,14) sont disposés sur la même face du support raidisseur (1) destinée à être tournée vers le réservoir (3) de carburant.

9. Véhicule automobile comportant un réservoir (3) de carburant et une carrosserie, **caractérisé en ce qu'**il comprend un ensemble d'un support raidisseur (1) et d'une sangle (2) selon l'une quelconque des revendications précédentes, la sangle (2) faisant le tour du réservoir (3) de carburant et le support raidisseur (1) étant soudé au réservoir (3) de carburant par la plage d'appui (6) d'au moins un bras (4) du support raidisseur (1), une zone de la carrosserie en vis-à-vis du réservoir (3) de carburant portant un goujon logé dans l'évidement central (7) du corps médian (5) du support raidisseur (1) en ayant traversé la toile de pré-maintien (8) obturant l'évidement central (7) pour un maintien du réservoir (3) de carburant au moins lors du montage du réservoir (3) de carburant dans le véhicule automobile.

10. Procédé de montage d'un réservoir (3) de carburant dans un véhicule automobile selon la revendication précédente, le procédé comprenant une étape de soudage de la plage d'appui (6) dudit au moins un bras (4) du support raidisseur (1) au réservoir (3) de carburant, une étape de solidarisation d'une sangle (2) entourant le réservoir (3) de carburant sur le support raidisseur (1) autour de l'évidement central (7) et une étape de solidarisation du réservoir (3) de carburant avec la carrosserie du véhicule par insertion d'un goujon porté par une zone de la carrosserie en vis-à-vis du réservoir (3) de carburant dans l'évidement central (7) du support raidisseur (1).

## Patentansprüche

1. Satz aus einem Versteifungsträger (1) und einem Gurt (2), der für einen Kraftstofftank (3) eines Kraftfahrzeugs bestimmt ist, wobei der Versteifungsträger (1) eine längliche Form mit mindestens einem Arm (4) in der Ebene hat Mittelkörper (5), mit dem ein Längsende des mindestens einen Arms (4) verbunden ist, wobei das andere Längsende des mindestens einen Arms (4) frei ist und einen Lagerblock (6) trägt, wobei das andere Längsende des mindestens einen Armes (4) sich senkrecht zum Rest des Arms (4) erstreckt und dazu bestimmt ist, mit dem Kraftstofftank (3) verschweißt zu werden, **dadurch gekennzeichnet, dass** der Mittelkörper (5) eine durch ihn hindurchgehende zentrale Aussparung (7) umfasst, die von einer Wiesenplane verschlossen ist (8) der dazu bestimmt ist, beim Verschließen des Kraftstofftanks (3) am Fahrzeug von einem Bolzen durchbohrt zu werden, wobei das Band (2) an einem Ende (2a) von einer Aussparung (11) durchquert wird, die mit der zentralen Aussparung (7) des Mittelkörpers (5) und an den Mittelkörper (5) angelegt, wobei der Mittelkörper (5) Haltemittel (9a, 9b ; 13,14) des Endes (2a) des Bandes (2) trägt.

2. Anordnung nach Anspruch 1, die mindestens zwei sich in entgegengesetzter Richtung erstreckende Hobelarme (4) aufweist, wobei jeder Hobelarm (4) eine Auflagefläche (6) aufweist.

3. Anordnung nach Anspruch 1 oder 2, bei der das von der Aussparung (11) durchquerte Ende des Bandes (2) einen abgerundeten Kopf (2a) bildet, der auf einer gemeinsamen Längsachse der Aussparungen (7, 11) des Mittelkörpers zentriert ist (5) und des Riemens (2), wobei die von dem Mittelkörper (5) getragenen Haltemittel (9a, 9b ; 13,14) als Rastmittel (9a, 9b) ausgebildet sind, die auf dem Umfang der abgerundeten Kopf (2a) auf einer Seite gegenüber einer Seite des abgerundeten Kopfes (2a), die gegen den Mittelkörper (5) angelegt ist.

4. Anordnung nach dem vorhergehenden Anspruch, bei der die Rastmittel die Form von zwei Befestigungslaschen (9a, 9b) haben, die in Bezug auf die gemeinsame Längsachse der Aussparungen (7, 11) des Mittelkörpers (5) diametral gegenüberliegend angeordnet sind ) und das Band (2), wobei jede Befestigungslasche (9a, 9b) einen sich parallel zur Längsachse der Aussparungen (7, 11) erstreckenden Basisabschnitt (9a) umfasst, der an einem Ende mit der Körpermitte (5) verbunden und verlängert ist an seinem anderen Ende durch einen freien Abschnitt (9b), der relativ zum Basisabschnitt (9a) gebogen ist, während er an der gegenüberliegenden Seite des abgerundeten Kopfes (2a) anliegt, wobei der Basisabschnitt (9a) flexibel ist, so dass der freie Abschnitt (9b) bei einer Beaufschlagung des Basisteils (9a) mit Abstand von der Längsachse aus ihrer Anlage an der gegenüberliegenden Stirnseite des abgerundeten Kopfes (2a) lösbar ist, wobei die Befestigungslasche (9a, 9b) in einer Anlage federnd vorgespannt ist gegen die gegenüberliegende Fläche positionieren, die freien Teile (9b) der beiden Befestigungslaschen (9a, 9b) zueinander zeigen.

5. Anordnung nach dem vorhergehenden Anspruch, bei der der Mittelkörper (5) zumindest teilweise kreisförmig ist und von zwei einander zugewandten Durchgängen (12) jeweils mit einer Befestigungslasche (9a, 9b) vollständig durchbohrt ist.

6. Anordnung nach Anspruch 1 oder 2, bei der das von der Aussparung (11) durchquerte Ende des Bandes (2) einen abgerundeten Kopf (2a) bildet, der auf einer gemeinsamen Längsachse der Aussparungen (7, 11) des Mittelkörpers zentriert ist (5) und das Band (2), wobei die von dem Mittelkörper (5) getragenen Haltemittel (9a, 9b ; 13,14) in Form von zylindrischen oder konischen Stützmitteln (13) mit einer ersten Basis vorliegen, die mit größerem Durchmesser für konische Stützmittel, ist am Mittelkörper (5) befestigt und eine zweite Basis wird durch ein zylindrisches Endstück (14) mit kleinerem Durchmesser als die zweite Basis verlängert, während sie mit der zweiten Basis konzentrisch ist, die zentrale Aussparung (7) sich an einem freien Ende des Stützmittels (13, 14) über einen Kragen (13a) mündend, der von einem verbleibenden Teil der zweiten Basis gebildet wird, der nicht von dem zylindrischen Endstück (14) eingenommen wird, einer Stirnseite des abgerundeten Kopfes (2a) dem Mittelkörper (5) zugewandt, der am Kragen (13a) anliegt, die em zylindrisches Ende (14) in die Aussparung (11) des abgerundeten Kopfes (2a) eingeführt wird.

7. Anordnung nach einem der Ansprüche 3 bis 5 und Anspruch 6, bei der die vom Mittelkörper (5) getragenen Haltemittel (9a, 9b ; 13,14) Rastmittel (9a, 9b) umfassen, die auf dem Umfang des abgerundeter Kopf (2a) und zylindrische oder konische Stützmittel (13), die das zylindrische Endstück (14) für den Auslass der zentralen Aussparung (7) tragen.

8. Anordnung nach einem der vorhergehenden Ansprüche, bei der das Stützpolster (6), das von einem freien Längsende des mindestens einen Arms (4) getragen wird, und die Haltemittel (9a, 9b ; 13,14) auf der dieselbe Seite des Versteifungsträgers (1), die dem Kraftstofftank (3) zugewandt ist.

9. Kraftfahrzeug mit einem Kraftstofftank (3) und einer Karosserie, **dadurch gekennzeichnet, dass** es eine Anordnung aus einem Versteifungsträger (1) und einem Gurt (2) nach einem der vorhergehenden Ansprüche umfasst, wobei der Gurt (2) umläuft wobei der Kraftstofftank (3) und der Versteifungsträger (1) durch die Auflagefläche (6) von mindestens einem Arm (4) des Versteifungsträgers (1) mit dem Kraftstofftank (3) verschweißt sind, eine Fläche von wobei die dem Kraftstofftank (3) zugewandte Karosserie einen Zapfen trägt, der in der zentralen Aussparung (7) des Mittelkörpers (5) des Versteifungsträgers (1) untergebracht ist, der durch das Vorhaltegewebe (8) hindurchgeführt ist, das die zentrale Aussparung verschließt (7) zum Halten des Kraftstoffbehälters (3) zumindest bei der Montage des Kraftstoffbehälters (3) im Kraftfahrzeug.

10. Verfahren zum Anbringen eines Kraftstofftanks (3) in einem Kraftfahrzeug nach dem vorhergehenden Anspruch, wobei das Verfahren einen Schritt des Schweißens der Auflagefläche (6) des mindestens einen Arms (4) des Versteifungsträgers (1) umfasst. am Kraftstofftank (3), einen Schritt des Befestigens eines den Kraftstofftank (3) umgebenden Gurtes (2) an der Versteifungsstütze (1) um die zentrale Aussparung (7) und ein Schritt des Befestigens des Kraftstofftanks (3) mit der Karosserie des Fahrzeugs durch Einsetzen eines Bolzens, der von einem dem Kraftstofftank zugewandten Bereich der Karosserie getragen wird (3), in die zentrale Aussparung (7) des Versteifungsträgers (1).

## Claims

1. Set of a stiffening support (1) and a strap (2) intended for a motor vehicle fuel tank (3), the stiffening support (1) has an elongated shape with at least one arm (4) plane extending from a median body (5) to which one longitudinal end of said at least one arm (4) is connected, the other longitudinal end of said at least one arm (4) being free and carrying a bearing pad (6), said other longitudinal end of said at least one arm (4) extending perpendicularly to the rest of the arm (4) and being intended to be welded to the fuel tank (3), **characterized in that** the median body (5) comprising a central recess (7) passing therethrough closed by a meadow canvas -maintain (8) which is intended to be pierced, when capping the fuel tank (3) on the vehicle, by a stud, the strap (2) having one end (2a) traversed by a recess (11) aligned with the central recess (7) of the middle body (5) and applied against the middle body (5), the middle body (5) carrying retaining means (9a, 9b ; 13,14) of said end (2a) of the strap (2).

2. Assembly according to claim 1, which has at least two plane arms (4) extending in opposite direction from one another, each plane arm (4) comprising a bearing surface (6).

3. Assembly according to claim 1 or 2, in which the end of the strap (2) traversed by the recess (11) forms a rounded head (2a) centered on a longitudinal axis common to the recesses (7, 11) of the median body (5) and of the strap (2), the holding means (9a, 9b ; 13,14) carried by the median body (5) being in the form of latching means (9a, 9b) bearing on the periphery of the rounded head (2a) on a face opposite to a face of the rounded head (2a) applied against the median body (5).

4. Assembly according to the preceding claim, in which the latching means are in the form of two fixing lugs (9a, 9b) arranged being diametrically opposed with respect to the longitudinal axis common to the recesses (7, 11) of the median body (5) and the strap (2), each fixing tab (9a, 9b) comprising a base portion (9a) extending parallel to the longitudinal axis of the recesses (7, 11) connected at one end to the body median (5) and extended at its other end by a free portion (9b) bent relative to the base portion (9a) while resting against the opposite face of the rounded head (2a), the base portion (9a) being flexible so that the free portion (9b) can be released from its bearing against the opposite face of the rounded head (2a) during an action on the base portion (9a) at a distance from the longitudinal axis, the fixing tab (9a, 9b) being resiliently biased in a bearing position against the opposite face, the free portions es (9b) of the two fixing lugs (9a, 9b) pointing towards each other.

5. Assembly according to the preceding claim, in which the median body (5) is of at least partially circular shape, being pierced right through by two passages (12) facing each other respectively with a fixing lug (9a, 9b).

6. Assembly according to claim 1 or 2, in which the end of the strap (2) traversed by the recess (11) forms a rounded head (2a) centered on a longitudinal axis common to the recesses (7, 11) of the median body (5) and the strap (2), the holding means (9a, 9b ; 13,14) carried by the median body (5) being in the form of cylindrical or conical support means (13) including a first base, being that of larger diameter for conical support means, is secured to the median body (5) and a second base is extended by a cylindrical end piece (14) of smaller diameter than the second base while being concentric with the second base , the central recess (7) opening out at a free end of the support means (13,14) overhanging a collar (13a) formed by a remaining part of the second base not occupied by the cylindrical end piece (14), a face of the rounded head (2a) turned towards the median body (5) resting against the collar (13a), the em cylindrical end (14) being introduced into the recess (11) of the rounded head (2a).

7. Assembly according to any one of claims 3 to 5 and claim 6, in which the retaining means (9a, 9b ; 13,14) carried by the median body (5) comprise latching means (9a, 9b) resting on the periphery of the rounded head (2a) and cylindrical or conical support means (13) carrying the cylindrical end piece (14) for the outlet of the central recess (7).

8. Assembly according to any one of the preceding claims, in which the support pad (6) carried by a longitudinal free end of said at least one arm (4) and the retaining means (9a, 9b ; 13,14) are arranged on the same face of the stiffening support (1) intended to be turned towards the fuel tank (3).

9. Motor vehicle comprising a fuel tank (3) and a body, **characterized in that** it comprises an assembly of a stiffening support (1) and of a strap (2) according to any one of the preceding claims, the strap (2) going around the fuel tank (3) and the stiffening support (1) being welded to the fuel tank (3) by the bearing surface (6) of at least one arm (4) of the stiffening support (1), an area of the bodywork facing the fuel tank (3) carrying a stud housed in the central recess (7) of the central body (5) of the stiffening support (1) having passed through the pre-retaining fabric (8) closing off the central recess (7) for retaining the fuel tank (3) at least when mounting the fuel tank (3) in the motor vehicle.

10. Method for mounting a fuel tank (3) in a motor vehicle according to the preceding claim, the method comprising a step of welding the bearing surface (6) of said at least one arm (4) of the stiffening support (1) to the fuel tank (3), a step of securing a strap (2) surrounding the fuel tank (3) on the stiffening support (1) around the central recess (7) and a step of securing the fuel tank (3) with the body of the vehicle by inserting a stud carried by an area of the body facing the fuel tank (3) in the central recess (7) of the stiffening support (1).
